# EUROPÄISCHE PATENTSCHRIFT

(11) **EP 3 870 938 B1**
(45) Veröffentlichungstag und Bekanntmachung des Hinweises auf die Patenterteilung: **08.03.2023**
(21) Anmeldenummer: 19773076.5
(22) Anmeldetag: 20.09.2019
(51) Int. Cl.: G01F 1/58, G01L 19/00, G01L 19/14, G01L 13/06

(54) **MAGNETISCH-INDUKTIVES DURCHFLUSSMESSGERÄT**
MAGNETIC-INDUCTIVE FLOW METER
DÉBITMÈTRE MAGNETIQUE-INDUCTIF

(30) Priorität: 26.10.2018 DE 102018126784
(43) Veröffentlichungstag der Anmeldung: 01.09.2021
(73) Patentinhaber: Endress + Hauser Flowtec AG, 4153 Reinach (CH)
(72) Erfinder: VOIGT, Frank, 79576 Weil am Rhein (DE); ZIEGLER, Steffen, 79650 Schopfheim (DE); RUFER, Heinz, 4143 Dornach (CH)
(74) Vertreter: Penner, Paul
(86) Internationale Anmeldenummer: PCT/EP2019/075365
(87) Internationale Veröffentlichungsnummer: WO 2020/083583

(56) Entgegenhaltungen:
- WO-A2-2015/036187
- CN-U- 207 622 809
- DE-A1-102013 102 544
- JP-A- S5 692 414
- US-A- 5 670 724

## Beschreibung

Magnetisch-induktive Durchflussmessgeräte werden zur Bestimmung der Durchflussgeschwindigkeit und/oder des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse verlaufen. Die WO 2015/036187 A2 beispielsweise offenbart ein Magnetsystem umfassend eine Spule mit Polschuh und einem hohl ausgebildeten Spulenkern, in dem eine Elektrode angeordnet ist. Ein an die Mantelfläche des Messrohres angebrachtes Messelektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messspannung laut Faraday'schem Induktionsgesetz von der Geschwindigkeit des fließenden Mediums abhängt, kann aus der Messspannung die Durchflussgeschwindigkeit und, mit Hinzunahme einer bekannten Rohrquerschnittsfläche, der Volumendurchfluss des Mediums ermittelt werden.

Für spezielle Anwendungen sind zusätzlich zum Volumendurchfluss, Informationen bezüglich des Mediumsdruckes für die Überwachung von Unregelmäßigkeiten und Leckagestellen erwünscht.

Aus der EP0770855A1 ist bereits ein magnetisch-induktives Durchflussmessgerät bekannt, das neben den Messelektroden zur Ermittlung einer Durchflussgeschwindigkeit zwei Druckmesswandler aufweist, die in der Wandung des Messrohres entlang einer Mantellinie angeordnet sind.

Die US5670724 lehrt ein Durchflussmessgerät mit einem Messelektrodenpaar und einem unmittelbar zwischen den beiden Messelektroden angeordneten Druckmesswandler.

Die JP S56092414 A lehrt ein magnetisch-induktives Durchflussmessgerät mit einem seitlich in einer Messrohröffnung angeordneten Druckmesswandler. In einer weiteren Ausgestaltung weist eine der beiden Messelektroden einen Wirkdruckkanal zum Führen des Mediums zu dem mit der Messelektrode gekoppelten Druckmesswandler auf.

Diesen Ausgestaltungen nachteilig ist aber, dass für die Installation eines Druckmesswandlers eine Öffnung in das Messrohr eingearbeitet werden muss. Jede zusätzliche Öffnung ist jedoch eine potentielle Leckagestelle und sollte somit möglichst vermieden werden. Weiterhin sind derartige Messsysteme nicht kompakt.

Der Erfindung liegt die Aufgabe zugrunde ein kompakteres magnetisch-induktives Durchflussmessgerät bereitzustellen mit dem der Mediumsdruck des Mediums messbar ist.

Die Aufgabe wird erfindungsgemäß durch das magnetisch-induktive Durchflussmessgerät gemäß Anspruch 1 gelöst.

Ein erfindungsgemäßes magnetisch-induktives Durchflussmessgerät zur Ermittlung der Durchflussgeschwindigkeit und/oder des Volumendurchflusses eines Mediums und zur Ermittlung des Druckes des Mediums umfasst ein Messrohr zum Führen des Mediums, eine magnetfelderzeugende Vorrichtung, wobei die magnetfelderzeugende Vorrichtung mindestens eine Spule umfasst, und mindestens eine Elektrodenbaugruppe, die einen galvanischen Kontakt mit dem Medium formend in das Messrohr eingebaut ist, wobei die Elektrodenbaugruppe einen Elektrodenkörper aufweist, wobei der Elektrodenkörper stiftförmig ausgebildet ist und eine Stirnfläche aufweist, wobei die Elektrodenbaugruppe einen Druckmesswandler aufweist, welche mit dem Elektrodenkörper gekoppelt ist, wobei der Druckmesswandler mit dem auf die Stirnfläche wirkenden Druck beaufschlagbar ist, wobei der Elektrodenkörper endseitig mit einem Hohlraumkörper verbunden ist, wobei ein den Druckmesswandler umfassendes Gehäuse stoffschlüssig mit dem Hohlraumkörper verbunden ist, wobei die magnetfelderzeugende Vorrichtung mindestens einen im Inneren der Spule positionierten Spulenkern aufweist, wobei der Spulenkern als Hohlzylinder ausgebildet ist, wobei die Elektrodenbaugruppe im Inneren des Spulenkerns positioniert ist, wobei der Spulenkern eine Innenseite aufweist, wobei zwischen der Innenseite und dem Gehäuse eine Isolierung eingebracht ist.

Bislang sind für die Bestimmung des Mediumsdruckes zusätzlich in das Messrohr eingebrachte Druckmesswandler notwendig. Dabei werden üblicherweise zu den für die Messelektroden benötigten Öffnungen weitere Öffnungen in das Messrohr eingearbeitet. Die vorliegende Lösung benötigt keine zusätzlichen Öffnungen im Messrohr, da der auf die Stirnfläche des Elektrodenkörpers wirkende Druck des Mediums direkt über einen mit dem Elektrodenkörper gekoppelten Druckmesswandler aufgenommen wird. Dabei ist es besonders vorteilhaft, wenn der Druckmesswandler in Kontakt mit dem Medium steht, es sind aber auch Druckmesswandler bekannt, die dem Medium und somit auch dem Mediumsdruck nur indirekt ausgesetzt sind. Dies liegt beispielsweise dann vor, wenn sich Lufteinschlüsse zwischen Druckmesswandler und Medium befinden.

Als Elektrodenbaugruppe ist eine eine Elektrode bildende Baugruppe aus mindestens zwei Bauteilen zu verstehen, wobei mindestens ein erstes Bauteil die Funktion hat und dazu ausgebildet ist, eine Messspannung im fließenden Medium abzugreifen und mindestens ein zweites Bauteil die Funktion hat und dazu ausgebildet ist, den Druck im Medium zu messen. Die Elektrodenbaugruppe kann auch Bauteile umfassen, die die Funktion haben und dazu eingerichtet sind weitere Prozessparameter, wie zum Beispiel die Temperatur, die Viskosität und den pH-Wert des Mediums zu bestimmen.

Es ist besonders vorteilhaft, wenn das erste Bauteil den Elektrodenkörper umfasst. In diesem Kontext ist der Elektrodenkörper als eine aus herkömmlichen magnetisch-induktiven Durchflussmessgeräten bekannte Elektrode zu verstehen. Diese sind üblicherweise stiftförmig ausgebildet und lassen sich somit einfach in das Messrohr einbauen und fixieren. Sie weisen einen Elektrodenkopf mit einer Stirnfläche auf, auf die der Mediumsdruck wirkt.

Das zweite Bauteil ist als Druckmesswandler ausgebildet. Erfindungsgemäß ist der Druckmesswandler an den Elektrodenkörper gekoppelt. Darunter ist zum Einen zu verstehen, dass der Druckmesswandler mit dem Elektrodenkörper entweder direkt oder indirekt über ein weiteres Bauteil mechanisch verbunden ist. Zum Anderen kann es dahingehend gedeutet werden, dass der Druckmesswandler mit dem Elektrodenkörper in einem elektrischen Kontakt steht. Eine Kopplung zwischen dem Druckmesswandler und dem Elektrodenkörper ist schon dann gegeben, wenn beide Bauteile so ausgebildet sind, dass der auf die Stirnseite des Elektrodenkopfes wirkende Mediumsdruck auf den Druckmesswandler aufschlagbar ist.

Der Druckmesswandler kann beliebig ausgestaltet sein. Der Druckmesswandler kann zum Beispiel als Dehnungsmessstreifen, piezoresistiver Drucksensor, piezoelektrischer Drucksensor, kapazitiver Drucksensor, induktiver Drucksensor, optischer Drucksensor, thermischer Drucksensor oder Hall-Drucksensor ausgebildet sein.

Die Elektrodenbaugruppe übernimmt die Funktion einer Füllstandüberwachungselektrode, Bezugselektrode und/oder Messelektrode.

Die erfindungsgemäße magnetfelderzeugende Vorrichtung umfasst mindestens eine Spule und mindestens einen im Inneren der Spule positionierten Spulenkern, wobei der Spulenkern als Hohlzylinder ausgebildet und die Elektrodenbaugruppe im Inneren des Spulenkerns positioniert ist.

Es sind magnetfelderzeugende Vorrichtungen bekannt, die neben einer Spule mit einem im Inneren befindlichen Spulenkern zusätzlich ein Leitblech im Außenbereich und mindestens ein Abschirmelement zwischen einem Polschuh und dem Leitblech und/oder oberhalb des Leitblechs und der Spule umfassen. Das Leitblech und die Abschirmelemente erfüllen die Aufgabe Stör- oder Streufelder zu reduzieren. Dagegen ist der Polschuh für das Einkoppeln des Magnetfeldes in das Medium verantwortlich.

Nach der oben genannten vorteilhaften Ausgestaltung hat die Elektrodenbaugruppe die Funktion einer Füllstandsüberwachungselektrode und ist mit der magnetfelderzeugenden Vorrichtung verbaut. Dabei kann die Messung des Druckes durchgehend erfolgen oder phasenweise, nämlich immer dann, wenn das Magnetfeld ausgeschaltet ist.

Der Hohlraumkörper kann gleichzeitig als Adapter für weitere Messwandler ausgestaltet sein. Wobei der Messwandler ein Thermometer, einen PH-Sensor oder einen Sensoren zu Ermittlung der Viskosität, der Zusammensetzung des Mediums und/oder weiterer Prozessparameter des Mediums umfasst.

Das Gehäuse ist stoffschlüssig mit dem Hohlraumkörper, insbesondere über eine Schraub-, Schweiß-, Löt- oder Klebeverbindung. Dadurch kann eine ausreichende elektrische Kontaktierung zwischen Gehäuse und Hohlraumkörper realisiert werden. Bedingt durch das Herstellverfahren des erfindungsgemäßen magnetisch-induktiven Durchflussmessgerätes ist zwischen der endseitigen Stirnfläche des Elektrodenkörpers und dem Hohlraumkörper eine formschlüssige Verbindung zum Abdichten eingebracht. Diese verhindert ein Austreten des Mediums. Es ist vorteilhaft, wenn die Verbindung als formschlüssige Verbindung ausgebildet ist, da dadurch ein Austausch der einzelnen Bauteile gewährleistbar ist. Die formschlüssige Verbindung ist dabei als Dichtring und insbesondere als Kegeldichtung ausgebildet. Die Dichtung kann auch elektrisch isolierend sein, da die elektrische Kontaktierung mit dem Elektrodenkörper über weitere Kontaktstellen, beispielsweise dem Gewinde, realisierbar ist.

Die Verbindung zwischen der endseitigen Stirnfläche des Elektrodenkörpers und dem Hohlraumkörper kann aber auch stoffschlüssig ausgebildet sein. In diesem Fall wird die Verbindung nach dem Einführen des Elektrodenkörpers in die in das Messrohr eingebrachte Öffnung und Fixieren des Elektrodenkörpers an das Messrohr realisiert.

Erfindungsgemäß weist der Spulenkern eine Innenseite auf, wobei zwischen der Innenseite und dem Gehäuse eine Isolierung eingebracht ist.

Da die elektrische Kontaktierung des Elektrodenkörpers über das Gehäuse des Druckmesswandlers realisiert ist, ist eine Isolierung zwischen den Elektrodenbaugruppe und dem Spulenkern notwendig. Die Isolierung kann als Beschichtung oder als hohlzylindrische Isolierhülse ausgebildet sein.

Gemäß einer weiteren Ausgestaltung umfasst der Druckmesswandler eine Messmembrane.

Es ist besonders vorteilhaft, wenn der Druckmesswandler eine Messmembrane umfasst, da derartige Druckmesswandler mit der notwendigen Größenordnung herstellbar ist und eine Kopplung zwischen Druckmesswandler und Elektrodenkörper ohne zusätzliche Adapter realisierbar ist. Weiterhin decken Druckmesswandler mit Messmembranen den für die Trinkwasseranwendungen interessanten Druckbereich ab.

Gemäß einer weiteren Ausgestaltung weist der Elektrodenkörper eine zum Messrohr offene Bohrung auf.

Die Bohrung dient dabei zum Führen des Mediums und kann entweder als Sacklochbohrung oder als Durchgangsbohrung ausgebildet sein. Im Falle einer Sacklochbohrung kann der Druckmesswandler am Ende der Bohrung oder aber auch an der Innenwand der Bohrung angebracht sein. Ein Elektrodenkörper mit Durchgangsbohrung weist eine eingangsseitige und ausgangsseitige Stirnfläche auf. Im Falle einer Durchgangsbohrung kann der Druckwandler an der Innenwand der Bohrung angebracht sein, es ist jedoch besonders vorteilhaft, insbesondere im Falle eines eine Messmembrane umfassenden Druckmesswandlers, wenn ebendieser an der auslaufseitigen Stirnfläche des Elektrodenkörpers angebracht ist.

Der Hohlraumkörper ist dazu eingerichtet den Druckwirkkanal aufzuweiten, so dass Messmembranen, deren Durchmesser größer ist als der Durchmesser der Bohrung, verwendet werden können. Dadurch kann die Fläche auf die der Mediumsdruck erhöht und die Messgenauigkeit der Druckmessung gesteigert werden.

Gemäß einer weiteren Ausgestaltung ist die Bohrung durchgehend und bildet einen integrierten Wirkdruckkanal zum Führen des Mediums bildet.

Es ist besonders vorteilhaft, wenn die Bohrung durchgehend als Wirkdruckkanal ausgebildet ist, da sich dadurch eine Vielzahl an weiteren Ausgestaltungen bezüglich der Koppelung des Druckmesswandlers an den Elektrodenkörper eröffnen. Eine vorteilhafte Ausgestaltung weist einen an der auslaufseitigen Stirnfläche des Elektrodenkörpers angebrachten Adapter auf, über den weitere Messwandler zum Erfassen von Prozessparametern mit dem Elektrodenkörper gekoppelt sind.

Die Innenseite der Bohrung kann eine Beschichtung aufweisen, die das Eindringen des Mediums in die Bohrung und die Benetzung der Innenseite der Bohrung optimiert. Der Wirkdruckkanal bzw. die Bohrung muss nicht zwingend selbstentleerend sein, da Druckmesswandler bekanntermaßen den Druck eines Mediums auch indirekt abgreifen können.

Gemäß einer weiteren Ausgestaltung ist eine elektrische Kontaktierung des Elektrodenkörpers über den Hohlraumkörper und/oder das Gehäuse realisiert.

Die oben genannte Ausgestaltung ist vorteilhaft, da auf eine zusätzliche Verkabelung bzw. eine zusätzliche Kontaktiervorrichtung an dem Elektrodenkörper verzichtet werden kann.

Gemäß einer weiteren Ausgestaltung weist das Gehäuse mindestens eine Kontaktiervorrichtung auf, über die die Elektrodenbaugruppe mit einer Mess- und/oder Auswerteeinheit in einem elektrischen Kontakt steht.

Durch die Kontaktiervorrichtung im Gehäuse des Druckmesswandlers reicht eine einzelne Steckverbindung zum Abgreifen des Drucksignals und der Messspannung aus.

Gemäß einer weiteren Ausgestaltung weist der Elektrodenkörper einen Elektrodenkopf auf, wobei der Elektrodenkopf eine Kontur aufweist.

Die Kontur ist dabei schlitzförmig als Nut oder kreuzförmig ausgebildet. Sie kann aber jede beliebige Struktur annehmen, die zu einer Vereinfachung der Montage des Elektrodenkörpers in das Messrohr führt. Die Kontur ist dermaßen ausgebildet, dass bei der Herstellung des erfindungsgemäßen magnetisch-induktiven Durchflussmessgerätes der Monteur den Elektrodenkörper an der Kontur fixieren kann, um dann im nächsten Schritt die Isolierhülle aufzustecken und den Elektrodenkörper mit einer Mutter an das Messrohr zu befestigen.

Gemäß einer weiteren Ausgestaltung umfasst der Elektrodenkörper eine Füllstandsüberwachungselektrode und/oder eine Bezugselektrode und/oder eine Messelektrode zum Abgreifen einer Messspannung im Medium.

Gemäß einer weiteren Ausgestaltung ist der Elektrodenkörper als Stiftelektrode, Spitzelektrode oder Pilzelektrode ausgebildet ist.

Gemäß einer weiteren Ausgestaltung weist der Elektrodenkörper endseitig eine Grundform auf, welche als Kegel oder als Kegelstumpf ausgebildet ist, wobei der Hohlraumkörper eine Aufnahme für den Elektrodenkörper aufweist, welche komplementär zur Grundform des Elektrodenkörpers ausgebildet ist.

Dadurch kann eine Gasdichtigkeit zwischen Elektrodenkörper und Hohlraumkörper bereits bei geringem Montageaufwand realisiert werden. Eine Gasdichtigkeit ist besonders dann notwendig, wenn ein Luftvolumen zwischen Druckmesswandler und dem fließfähigen Medium vorgesehen ist.

Zusätzlich kann auf ein Schmiermittel verzichtet werden, was insbesondere für Anwendungen im Food&Beverage Bereich vorteilhaft ist.

Es ist vorteilhaft, wenn der Hohlraumkörper eine Aufnahme für den Elektrodenkörper mit einem Innengewinde aufweist, um somit eine lösbare Verbindung mit dem Elektrodenkörper und dem im Endbereich des Elektrodenkörpers eingearbeiteten Außengewinde zu realisieren.

Gemäß einer weiteren Ausgestaltung weist die Grundform eine Mantellinie und eine Kegelachse auf, welche zusammen einen Winkel *φ_{E}* bilden, wobei der Winkel *φ_{E}* zwischen 5° und 25° liegt.

Der komplementär zum Endbereich des Elektrodenkörpers ausgebildete Bereich der Aufnahme des Hohlraumkörpers weist eine Mantellinie und eine Kegelachse auf, wobei die Kegelachse und die Mantellinie einen Winkel *φ_{H}* aufspannen. Der Winkel *φ_{H}* liegt vorzugsweise zwischen 5° und 25°. Ein besonders stabile Verbindung kann dann realisiert werden, wenn die Differenz *φ_{E}* - *φ_{H}* zwischen 0° und 4° liegt. Dies kann beispielsweise dadurch realisiert werden, dass bei der Herstellung der beiden Bauteile unterschiedliche Maßtoleranzen für die jeweiligen Winkel angenommen werden. Letztendlich kann durch die teilweise konische Ausbildung des Elektrodenkörpers und eine dazu komplementär ausgebildete Aufnahme im Hohlraumkörper eine langzeitstabile kraftschlüssige Verbindung zwischen den beiden Bauteilen realisiert werden.

Vorteilhafterweise sind der Hohlraumkörper und der Elektrodenkörper aus gleichem Material gebildet. Bei ausreichendem Druck können somit der Elektrodenkörper und der Hohlraumkörper miteinander eine Kaltschweiß-verbindung bilden.

Die Erfindung wird anhand der nachfolgenden Figuren näher erläutert. Es zeigt:
Fig. 1: eine schematische Darstellung eines Rohrquerschnitts eines magnetisch-induktiven Durchflussmessgerätes nach dem Stand der Technik;
Fig. 2: eine schematische Explosionsdarstellung einer erfindungsgemäßen Elektrodenbaugruppe;
Fig. 3: eine schematische Darstellung eines Längsschnittes eines erfindungsgemäßen magnetisch-induktiven Durchflussmessgerätes; und
Fig. 4: einen Längsschnitt des erfindungsgemäßen Hohlraumkörpers und eine Nahansicht; und
Fig. 5: einen Längsschnitt des erfindungsgemäßen Elektrodenkörpers und eine Nahansicht.

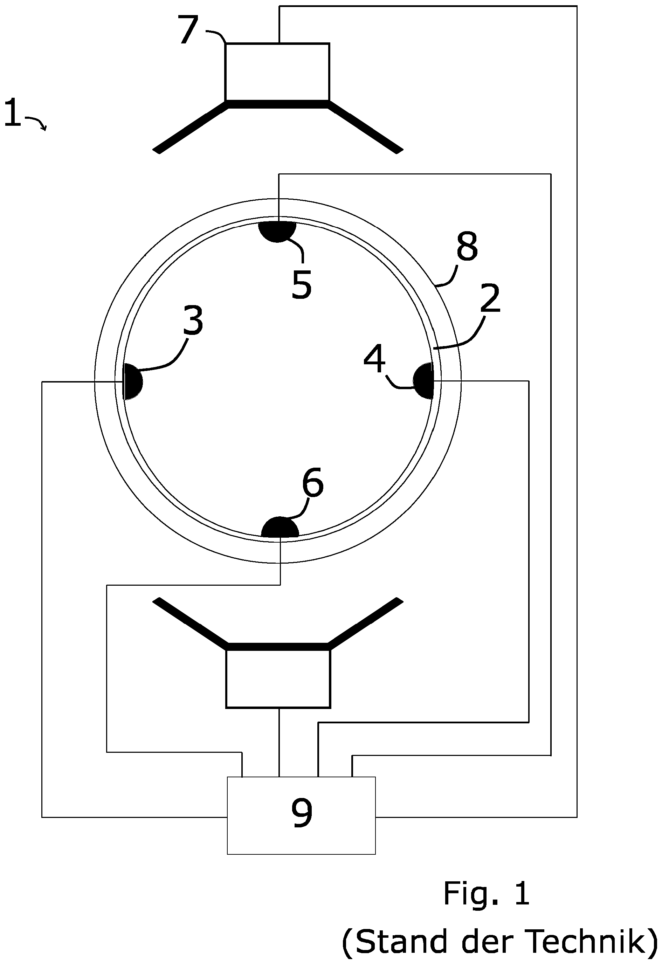

Die Fig. 1 zeigt ein aus dem Stand der Technik bekanntes magnetisch-induktiven Durchflussmessgerätes. Der Aufbau und das Messprinzip eines magnetisch-induktiven Durchflussmessgerätes sind grundsätzlich bekannt. Durch ein Messrohr (1) wird ein Medium geleitet, das eine elektrische Leitfähigkeit aufweist. Eine magnetfelderzeugende Vorrichtung (7) ist so angebracht, dass sich die Magnetfeldlinien senkrecht zu einer durch die Messrohrachse definierten Längsrichtung orientieren. Als magnetfelderzeugende Vorrichtung (7) eignet sich vorzugsweise eine Sattelspule oder ein Polschuh (26) mit aufgesetzter Spule (23) und Spulenkern (24). Bei angelegtem Magnetfeld entsteht im Messrohr (1) eine durchflussabhängige Potentialverteilung, die mit zwei an der Innenwand des Messrohres (1) angebrachten Messelektroden (3, 4) abgegriffen wird. In der Regel sind diese diametral angeordnet und bilden eine Elektrodenachse, die senkrecht zu den Magnetfeldlinien und der Längsachse des Rohres verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Messelektroden (3, 4) anliegenden Messspannung über das Rohr (8) zu verhindern, wird die Innenwand mit einem isolierenden Material beziehungsweise einem Kunststoff-Liner (2) ausgekleidet. Das durch eine magnetfelderzeugende Vorrichtung, beispielsweise einen Elektromagneten, aufgebaute Magnetfeld wird durch einen mittels einer Betriebseinheit getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten im Medium oder geringer Leitfähigkeit. Eine Messeinheit liest die an den Messelektroden (3, 4) anliegende Spannung aus und gibt die Durchflussgeschwindigkeit und/oder den mittels einer Auswerteeinheit errechneten Volumendurchfluss des Mediums aus. Handelsübliche magnetisch-induktive Durchflussmessgeräte weisen zusätzlich zu den Messelektroden (3, 4) zwei weitere Elektroden (5, 6) auf. Zum einen dient eine Füllstandsüberwachungselektrode (5), die optimalerweise am höchsten Punkt im Rohr (8) angebracht ist und nur einen minimalen Abstand zur Rohrinnenwandung aufweist, dazu, eine Teilbefüllung des Messrohres (1) zu detektieren, diese Information an den Nutzer weiterzuleiten und/oder den Füllstand bei der Ermittlung des Volumendurchflusses zu berücksichtigen. Des Weiteren dient eine Bezugselektrode (6), die üblicherweise diametral zur Füllstandsüberwachungselektrode (5) angebracht ist, dazu eine ausreichende Erdung des Mediums zu gewährleisten.

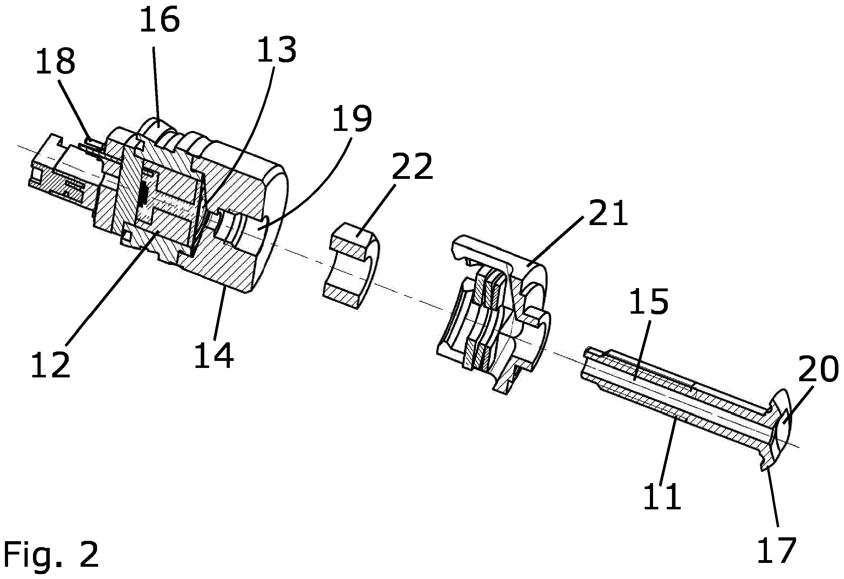

Wie in Fig. 2 dargestellt, ist der Druckmesswandler (12) ein Teil der Elektrodenbaugruppe (10), die zusätzlich zumindest einen Elektrodenkörper (11) umfasst. Der Druckmesswandler (12) ist dabei in einem Gehäuse (16) untergebracht, das leitfähig ist und somit einen elektrischen Kontakt zwischen Elektrodenkörper (11) und einer an den Druckmesswandler (12) endständig angebrachten Kontaktiervorrichtung (18) herstellt. Somit steht die gesamte Elektrodenbaugruppe (10) in einem galvanischen Kontakt mit dem Medium. In einer Weiterbildung bildet ein Hohlraumkörper (14) einen Hohlraum (19) zwischen dem Druckmesswandler (12) und dem Elektrodenkörper (11) bzw. dem Ausgang der Bohrung (15), welche als Wirkdruckkanal ausgebildet ist. Somit wird der auf die Stirnfläche des Elektrodenkörpers (11) wirkende Mediumsdruck über den Wirkdruckkanal zur Messmembrane (13) geleitet, wo er detektiert wird. Weiterhin ist das Gehäuse (16) stoffschlüssig mit dem Hohlraumkörper (14) verbunden. Der Elektrodenkörper (11) weist einen Elektrodenkopf (17) auf, wobei der Elektrodenkopf (17) eine Kontur aufweist. Die Kontaktiervorrichtung (18) dient zum Abgreifen des in ein elektrisches bzw. digitales Signal umgewandelten Mediumsdruckes mit einer Mess- und/oder Auswerteeinheit (9). Dabei umfasst die Kontaktiervorrichtung (18) mindestens einen Pin, der in einem elektrischen Kontakt mit dem Gehäuse (16) und somit mit den Elektrodenkörper (11) steht. Der Hohlraumkörper (14) ist dermaßen ausgebildet, dass er zum Einen einen Hohlraum (12) zwischen Messmembrane (13) und Elektrodenkörper (11) formt und zum Anderen den Elektrodenkörper (11) in dem Maße abdichtet, dass das durch den Wirkdruckkanal fließende Medium nicht über die Kontaktfläche austreten kann. Der Elektrodenkörper (11) weist ein Gewinde auf, das dazu dient den Elektrodenkörper (11) an dem Messrohr (1) zu befestigen und den ein Innengewinde aufweisenden Hohlraumkörper (14) anzuschließen.

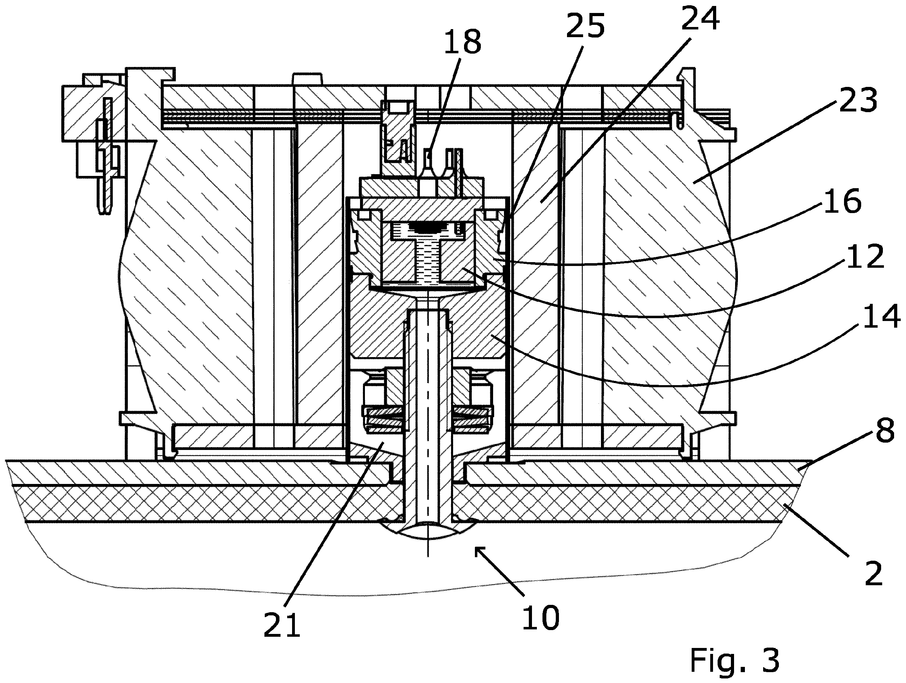

Das in Fig. 3 dargestellte magnetisch-induktive Durchflussmessgerät weist eine Elektrodenbaugruppe (10) auf, die einen stiftförmigen Elektrodenkörper (11) mit einem eine Kontur (20) aufweisenden Elektrodenkopf (17), eine Isolierhülse (21), eine Mutter (22), einen Hohlraumkörper (14) und einen Druckmesswandler (12) umfasst. Der Elektrodenkörper (11) weist ein Gewinde auf, das zum Einen zur Befestigung des Elektrodenkörpers (11) an das Messrohr (1) mit einer Mutter (22) dient und zum Anderen zum Ankoppeln des Hohlraumkörpers (14) und/oder Druckmesswandlers (12) dient. Für das Anbringen der Elektrodenbaugruppe (10) in das Messrohr (1) wird der Elektrodenkörper (11) durch eine in das Rohr (8) und Liner (2) eingearbeitete Öffnung durchgeführt und mit einer Isolierhülse (21) und einer Mutter (22) außenseitig vom Rohr fixiert. Der Hohlraumkörper (14) weist ein Innengewinde auf, dadurch kann der Hohlraumkörper (14) mit dem formschlüssig verbundenen Druckmesswandler (12) auf das Gewinde des Elektrodenkörpers (11) aufgeschraubt werden. Der Hohlraumkörper (14) ist ausgebildet einen dichten Kontakt zum Elektrodenkörper (11) herzustellen, so dass das durch die Bohrung fließende Medium nicht an der Kontaktstelle der beiden Bauteile austreten kann. Die Dichtung ist bevorzugt als Kegeldichtung ausgebildet. Die in der Fig. 3 dargestellte Elektrodenbaugruppe (10) ist als Füllstandsüberwachungselektrode (5) ausgebildet und im Innern einer Spule (23), insbesondere im Innern eines Spulenkerns (24), angeordnet. Für diese Weiterbildung ist es notwendig den Spulenkern (24) als Hohlzylinder auszubilden und die Elektrodenbaugruppe (10) elektrisch von der magnetfelderzeugenden Vorrichtung (7), insbesondere der Spule (23) und dem Spulenkern (24) zu isolieren. Die Isolierung (25) kann durch ein Beschichten der Innenseite des Spulenkerns (24) mit einem elektrisch isolierenden Material oder dem Einführen eines elektrisch isolierenden Hohlzylinders zwischen Spulenkern (24) und Elektrodenbaugruppe (10) realisiert sein.

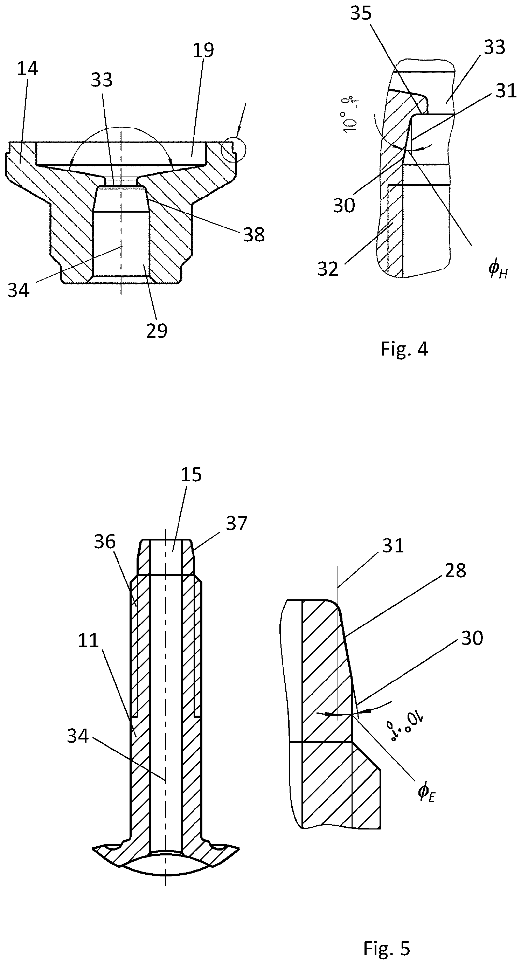

Der in Fig. 4 dargestellte Hohlraumkörper (14) weist eine erste Stirnseite und eine zweite Stirnseite auf. An der ersten Stirnseite ist eine Vertiefung eingearbeitet, welche zusammen mit dem Gehäuse des Druckmesswandlers einen Hohlraum (19) bildet. Die zweite Stirnseite weist eine Aufnahme (29) für den Elektrodenkörper auf. Die Aufnahme (29) umfasst ein Innengewinde (32), welches dazu dient den Hohlraumkörper (14) mit dem Elektrodenkörper lösbar zu verbinden. Die Aufnahme (29) ist zumindest teilweise zylindrisch ausgebildet und weist einen Bereich auf, welcher eine in Richtung des Hohlraumes (19) konisch ausgebildete Verjüngung aufweist, die komplementär zum endseitigen Bereich des Elektrodenkörpers geformt ist. In diesem Bereich nimmt die Aufnahme (29) die Form eines Kegelstumpfes an. Die Aufnahme (29) kann eingangsseitig einen weiteren Bereich aufweisen, der konisch ausgebildet ist und dazu eingerichtet ist das Einführen des Elektrodenkörpers zu vereinfachen. Der Hohlraum (19) und die Aufnahme (29) sind über eine Durchgangsbohrung (33) miteinander verbunden. Die Durchgangsbohrung (33) und die Aufnahme (29) weisen eine gemeinsame Symmetrieachse (34) auf.

Die Nahansicht zeigt einen Ausschnitt vom Längsschnitt des Hohlraumkörpers (14). Die Aufnahme (29) weist einen Innendurchmesser auf, welcher in Richtung des Hohlraumes (19) kontinuierlich abnimmt. Dadurch nimmt die Aufnahme (29) in dem Bereich zumindest teilweise die Form eines Kegelstumpfes an. Die Aufnahme (29) weist eine Anschlagsfläche (35) für den Elektrodenkörper auf. Die konische Verjüngung weist eine Mantelline (30) auf, welche die Anschlagsfläche (35) schneidet. Ein Lot der Anschlagsfläche (35) bzw. eine Kegelachse (31) und die Mantellinie (30) bilden einen Winkel *φ_{H}*, welcher bevorzugt zwischen 5° und 25° liegt. Bei der abgebildeten Ausgestaltung liegt der Winkel *φ_{H}* bei 10°, mit einer Maßtoleranz von -1°.

Die Fig. 5 zeigt einen erfindungsgemäßen Elektrodenkörper (11) mit einer Bohrung (15), die als Wirkdruckkanal ausgebildet ist. Der Elektrodenkörper (11) ist zumindest teilweise als Hohlzylinder ausgebildet. In einem Bereich weist der Elektrodenkörper (11) ein Außengewinde (36) auf, welches dazu dient den Elektrodenkörper (11) mit dem Hohlraumkörper (14) trennbar zu verbinden. In einem Endbereich des Elektrodenkörpers (11), welcher in die Aufnahme des Hohlraumkörpers (14) eingeführt wird nimmt die Materialstärke des Elektrodenkörpers (11) in Richtung des anzubringenden Hohlraumkörpers (14) ab. Der Endbereich ist konisch ausgebildet und nimmt die Grundform eines Kegelstumpfes mit einer Bohrung (15) an, wobei die Bohrung (15) und der Kegelstumpf eine gemeinsame Symmetrieachse (34) aufweisen. Im Einbauzustand steht die Mantelfläche (37) des Endbereiches in Kontakt mit dem Hohlraumkörper. Beim Verschrauben des Elektrodenkörpers (11) mit dem Hohlraumkörper reibt die Mantelfläche (37) entlang der Innenmantelfläche des Hohlraumkörpers (14). Wird weitere Kraft auf den Elektrodenkörper (11) ausgeübt, so kommt es zu einer Verformung des Endbereiches des Elektrodenkörpers (11) in Richtung der Symmetrieachse (34). Der Elektrodenkörper (11) muss nicht zwingenderweise die Anschlagsfläche (35) berühren. Es kann sich auch ein Spalt zwischen Anschlagsfläche des Hohlraumkörpers und Stirnseite des Elektrodenkörpers (11) ausbilden.

Die Nahansicht zeigt den Endbereich des Elektrodenkörpers (11). Der Außendurchmesser des Elektrodenkörpers (11) nimmt in Richtung der endseitigen Stirnfläche ab, während der Durchmesser der Bohrung (15) konstant bleibt. Es kommt zu einer Abnahme der Materialstärke im Endbereich. Der Übergang von Stirnfläche und Mantelfläche (37) des Elektrodenkörpers (11) ist abgerundet. Die Mantellinie (30) und die Kegelachse (31) der Grundform bilden eine Winkel *φ_{E}*, der bevorzugt zwischen 5° und 25° liegt. Die Winkel *φ_{H}* und *φ_{E}* sind so aufeinander zugeschnitten, dass die Differenz *φ_{E}* - *φ_{H}* zwischen 0° und 4° liegt. In der abgebildeten Ausgestaltung liegt der Winkel *φ_{E}* bei 10° mit einer Maßtoleranz von +1°.

### Bezugszeichenliste

- 1: Messrohr
- 2: Liner
- 3: erste Messelektrode
- 4: zweite Messelektrode
- 5: Füllstandsüberwachungselektrode
- 6: Bezugselektrode
- 7: magnetfelderzeugende Vorrichtung
- 8: Rohr
- 9: Mess-, Betriebs- und/oder Auswerteeinheit
- 10: Elektrodenbaugruppe
- 11: Elektrodenkörper
- 12: Druckmesswandler
- 13: Messmembrane
- 14: Hohlraumkörper
- 15: Bohrung
- 16: Gehäuse
- 17: Elektrodenkopf
- 18: Kontaktiervorrichtung
- 19: Hohlraum
- 20: Kontur
- 21: Isolierhülse
- 22: Mutter
- 23: Spule
- 24: Spulenkern
- 25: Isolierung
- 26: Polschuh
- 27: Leitblech
- 28: Grundform
- 29: Aufnahme
- 30: Mantellinie
- 31: Kegelachse
- 32: Innengewinde
- 33: Durchgangsbohrung
- 34: Symmetrieachse
- 35: Anschlagsfläche
- 36: Außengewinde
- 37: Mantelfläche
- 38: Innenmantelfläche

## Patentansprüche

1. Magnetisch-induktives Durchflussmessgerät zur Ermittlung der Durchflussgeschwindigkeit und/oder des Volumendurchflusses eines Mediums und zur Ermittlung des Druckes des Mediums, umfassend:
- ein Messrohr (1) zum Führen des Mediums;
- eine magnetfelderzeugende Vorrichtung (7),
wobei die magnetfelderzeugende Vorrichtung (7) mindestens eine Spule (23) umfasst; und
- mindestens eine Elektrodenbaugruppe (10), die einen galvanischen Kontakt mit dem Medium formend in das Messrohr (1) eingebaut ist,
wobei die Elektrodenbaugruppe (10) einen Elektrodenkörper (11) aufweist,
wobei der Elektrodenkörper (11) stiftförmig ausgebildet ist und eine Stirnfläche aufweist,
wobei die Elektrodenbaugruppe (10) einen Druckmesswandler (12) aufweist, welcher mit dem Elektrodenkörper (11) gekoppelt ist,
wobei der Druckmesswandler (12) mit dem auf die Stirnfläche wirkenden Druck beaufschlagbar ist,
wobei der Elektrodenkörper (11) endseitig mit einem Hohlraumkörper (14) verbunden ist,
**dadurch gekennzeichnet, dass** ein den Druckmesswandler (12) umfassendes Gehäuse (16) stoffschlüssig mit dem Hohlraumkörper (14) verbunden ist,
wobei die magnetfelderzeugende Vorrichtung (7) mindestens einen im Inneren der Spule (23) positionierten Spulenkern (24) aufweist,
wobei der Spulenkern (24) als Hohlzylinder ausgebildet ist,
wobei die Elektrodenbaugruppe (10) im Inneren des Spulenkerns (24) positioniert ist,
wobei der Spulenkern (24) eine Innenseite aufweist,
wobei zwischen der Innenseite und dem Gehäuse (16) eine Isolierung (25) eingebracht ist.

2. Durchflussmessgerät nach Anspruch 1,
wobei der Druckmesswandler (12) eine Messmembrane (13) umfasst.

3. Durchflussmessgerät nach einem der vorhergehenden Ansprüche,
wobei der Elektrodenkörper (11) eine zum Messrohr (1) offene Bohrung (15) aufweist.

4. Durchflussmessgerät nach Anspruch 3,
wobei die Bohrung (15) durchgehend ist und einen integrierten Wirkdruckkanal zum Führen des Mediums bildet.

5. Durchflussmessgerät nach einem der vorhergehenden Ansprüche,
wobei eine elektrische Kontaktierung des Elektrodenkörpers (11) über den Hohlraumkörper (14) und/oder das Gehäuse (16) realisiert ist.

6. Durchflussmessgerät nach einem der vorhergehenden Ansprüche,
wobei das Gehäuse (16) mindestens eine Kontaktiervorrichtung (18) aufweist, über die die Elektrodenbaugruppe (10) mit einer Mess- und/oder Auswerteeinheit (9) in einem elektrischen Kontakt steht.

7. Durchflussmessgerät nach einem der vorhergehenden Ansprüche,
wobei der Elektrodenkörper (11) eine Füllstandsüberwachungselektrode (5) und/oder eine Bezugselektrode (6) und/oder eine Messelektrode (3, 4) zum Abgreifen einer Messspannung im Medium umfasst.

8. Durchflussmessgerät nach einem der vorhergehenden Ansprüche,
wobei der Elektrodenkörper (11) als Stiftelektrode, Spitzelektrode oder Pilzelektrode ausgebildet ist.

9. Durchflussmessgerät nach einem der vorhergehenden Ansprüche,
wobei der Elektrodenkörper (11) endseitig eine Grundform (28) aufweist, welche als Kegel oder als Kegelstumpf ausgebildet ist,
wobei der Hohlraumkörper (14) eine Aufnahme (29) für den Elektrodenkörper (11) aufweist, welche komplementär zur Grundform (28) des Elektrodenkörpers (11) ausgebildet ist.

10. Durchflussmessgerät nach Anspruch 9,
wobei die Grundform (28) eine Mantellinie (30) und eine Kegelachse (31) aufweist, welche zusammen einen Winkel *φ_{E}* bilden,
wobei der Winkel *φ_{E}* zwischen 5° und 25° liegt.

## Claims

1. Electromagnetic flowmeter designed to determine the flow velocity and/or the volume flow of a medium and to determine the pressure of the medium, said flowmeter comprising:
- a measuring tube (1) designed to conduct the medium;
- a unit to generate the magnetic field (7),
wherein the unit to generate the magnetic field (7) comprises at least a coil (23); and
- at least an electrode module (10), which is installed in the measuring tube (1) forming a galvanic contact with the medium,
wherein the electrode module (10) has an electrode body (11),
wherein the electrode body (11) is designed in the form of a pin and has a front face,
wherein the electrode module (10) has a pressure transducer (12) which is coupled to the electrode body (11),
wherein the pressure transducer (12) can be exposed to the pressure acting on the front face,
wherein the electrode body (11) is connected at its end to a hollow body (14), **characterized in that**
a housing (16) comprising the pressure transducer (12) is connected to the hollow body (14) via a substance-to-substance connection,
wherein the unit to generate the magnetic field (7) has at least a coil core (24) located inside the coil (23),
wherein the coil core (24) is designed as a hollow cylinder,
wherein the electrode module (10) is located inside the coil core (24),
wherein the coil core (24) has an inner side,
wherein an insulation (25) is provided between the inner side and the housing (16).

2. Flowmeter as claimed in Claim 1,
wherein the pressure transducer (12) has a measuring diaphragm (13).

3. Flowmeter as claimed in one of the previous claims,
wherein the electrode body (11) has a bore (15) open towards the measuring tube (1).

4. Flowmeter as claimed in Claim 3,
wherein the bore (15) is a through-bore and forms an integrated active pressure channel to conduct the medium.

5. Flowmeter as claimed in one of the previous claims,
wherein electrical contacting of the electrode body (11) is implemented via the hollow body (14) and/or the housing (16).

6. Flowmeter as claimed in one of the previous claims,
wherein the housing (16) has at least a contacting unit (18) via which the electrode module (10) is in electrical contact with a measuring and/or evaluation unit (9).

7. Flowmeter as claimed in one of the previous claims,
wherein the electrode body (11) has a level monitoring electrode (5) and/or a reference electrode (6) and/or a measuring electrode (3, 4) to measure a measuring voltage in the medium.

8. Flowmeter as claimed in one of the previous claims,
wherein the electrode body (11) is designed as a pin electrode, a pointed electrode or a mushroom-shaped electrode.

9. Flowmeter as claimed in one of the previous claims,
wherein the electrode body (11) has a basic shape (28) at the end which is in the form of a cone or frustum, wherein the hollow body (14) has a holder (29) for the electrode body (11) which is complementary to the basic shape (28) of the electrode body (11).

10. Flowmeter as claimed in Claim 9,
wherein the basic shape (28) has a surface line (30) and a cone axis (31) which together form an angle *φ_{E}*,
wherein the angle *φ_{E}* is between 5° and 25°.

## Revendications

1. Débitmètre électromagnétique destiné à la détermination de la vitesse d'écoulement et/ou du débit volumique d'un produit et à la détermination de la pression du produit, lequel débitmètre comprend :
- un tube de mesure (1) destiné à guider le produit ;
- un dispositif de génération de champ magnétique (7),
le dispositif de génération de champ magnétique (7) comprenant au moins une bobine (23) ;
et
- au moins un module d'électrode (10), lequel est monté dans le tube de mesure (1) en formant un contact galvanique avec le produit,
le module d'électrode (10) présentant un corps d'électrode (11),
le corps d'électrode (11) étant réalisé en forme de tige et présentant une surface frontale,
le module d'électrode (10) présentant un transducteur de pression (12), lequel transducteur est couplé au corps d'électrode (11),
le transducteur de pression (12) pouvant être sollicité par la pression agissant sur la surface frontale,
le corps d'électrode (11) étant relié à son extrémité à un corps creux (14), **caractérisé en ce**
**qu'**un boîtier (16) comprenant le transducteur de pression (12) est relié au corps creux (14) par une liaison de matière,
le dispositif de génération de champ magnétique (7) présentant au moins un noyau de bobine (24) positionné à l'intérieur de la bobine (23),
le noyau de bobine (24) étant conçu comme un cylindre creux,
le module d'électrode (10) étant positionné à l'intérieur du noyau de bobine (24),
le noyau de bobine (24) présentant une face intérieure,
une isolation (25) étant introduite entre la face intérieure et le boîtier (16).

2. Débitmètre selon la revendication 1,
pour lequel le transducteur de pression (12) comprend une membrane de mesure (13).

3. Débitmètre selon l'une des revendications précédentes,
pour lequel le corps d'électrode (11) comporte un alésage (15) ouvert vers le tube de mesure (1).

4. Débitmètre selon la revendication 3,
pour lequel l'alésage (15) est traversant et forme un canal de pression active intégré pour le guidage du produit.

5. Débitmètre selon l'une des revendications précédentes,
pour lequel une mise en contact électrique du corps d'électrode (11) est réalisée par l'intermédiaire du corps creux (14) et/ou du boîtier (16).

6. Débitmètre selon l'une des revendications précédentes,
pour lequel le boîtier (16) comporte au moins un dispositif de mise en contact (18) par lequel le module d'électrode (10) est en contact électrique avec une unité de mesure et/ou d'exploitation (9).

7. Débitmètre selon l'une des revendications précédentes,
pour lequel le corps d'électrode (11) comprend une électrode de surveillance de niveau (5) et/ou une électrode de référence (6) et/ou une électrode de mesure (3, 4) pour prélever une tension de mesure dans le produit.

8. Débitmètre selon l'une des revendications précédentes,
pour lequel le corps d'électrode (11) est conçu comme une électrode-tige, une électrode à pointe ou une électrode champignon.

9. Débitmètre selon l'une des revendications précédentes,
pour lequel le corps d'électrode (11) présente à son extrémité une forme de base (28), laquelle forme est réalisée en tant que cône ou en tant que cône tronqué, le corps creux (14) présentant un logement (29) pour le corps d'électrode (11), lequel corps creux est réalisé de manière complémentaire à la forme de base (28) du corps d'électrode (11).

10. Débitmètre selon la revendication 9,
pour lequel la forme de base (28) présente une génératrice (30) et un axe de cône (31) qui forment ensemble un angle *φ_{E}*,
l'angle *φ_{E}* étant compris entre 5° et 25°.
